# EUROPEAN PATENT APPLICATION

(11) **EP 4 343 397 A1**
(43) Date of publication of application: **27.03.2024**
(21) Application number: 23193691.5
(22) Date of filing: 28.08.2023
(51) Int. Cl.: G02B 6/35, H04Q 11/00

(54) **OPTICAL CONTROL APPARATUS AND OPTICAL TRANSMISSION PATH MONITORING METHOD**

(30) Priority: 21.09.2022 JP 2022149706
(71) Applicant: NEC Corporation, 108-8001 Tokyo (JP)
(72) Inventor: KUROSAWA, Naofumi, Tokyo, 108-8001 (JP)
(74) Representative: Vossius & Partner Patentanwälte Rechtsanwälte mbB

(57) **Abstract**

An optical control apparatus includes a first connection unit to be connected to a first optical transmission path and a second optical transmission path, a second connection unit to be connected to the first optical transmission path and the second optical transmission path, and a route setting unit that complementarily sets a first optical route in the first connection unit, and a second optical route in the second connection unit, to either of a conductive state and a non-conductive state.

## Description

This application is based upon and claims the benefit of priority from Japanese patent application No. 2022-149706, filed on September 21, 2022, the disclosure of which is incorporated herein in its entirety by reference.

### TECHNICAL FIELD

The present disclosure relates to an optical control apparatus, and an optical transmission path monitoring method, and particularly relates to an optical control apparatus and an optical transmission path monitoring method for use in a long distance optical transmission system.

### BACKGROUND ART

In a long distance optical transmission system such as a submarine optical transmission system, a system is known in which a state of an optical transmission path constituted of an optical repeater, an optical fiber, and the like is monitored by a method in which a change in level of monitoring light in a specific wavelength band is measured, or a method in which information is added to monitoring light. Japanese Unexamined Patent Application Publication No. 2002-062217 describes one example of a system that monitors an optical transmission path as described above.

A related optical transmission path monitoring system described in Japanese Unexamined Patent Application Publication No. 2002-062217 includes an optical transmission path monitoring apparatus for an uplink line, an optical transmission path including an uplink line and a downlink line, an optical transmission path monitoring apparatus for a downlink line, and a signal light source for an uplink line. Further, the related optical transmission path monitoring system includes a wavelength multiplexer that wavelength-multiplexes signal light from the signal light source, and probe light for monitoring an optical fiber from the optical transmission path monitoring apparatus for the uplink line, or probe light for monitoring an optical repeater.

In the related optical transmission path monitoring system, a part of signal light and probe light is split by an optical fiber coupler connected to an output unit of each optical repeater, and only probe light is reflected by a wavelength selective reflection device. The reflected probe light is input again to the optical fiber coupler, sent to the downlink line via the optical fiber coupler, and input to the optical transmission path monitoring apparatus for the uplink line. Herein, in the related optical transmission path monitoring system, a different wavelength is allocated to monitoring probe light between the uplink line and the downlink line.

### SUMMARY

As described above, in the related optical transmission path monitoring system, a different wavelength is allocated to monitoring light between the uplink line and the downlink line. Further, a reflection center wavelength of a wavelength selective reflection device for the uplink line is made coincident with a wavelength of monitoring light for the uplink line, and a reflection center wavelength of a wavelength selective reflection device for the downlink line is made coincident with a wavelength of monitoring light for the downlink line. However, in order to minimize a usage band of monitoring light in a wavelength band of an optical transmission path, it is desirable to use monitoring light in the same wavelength band for both of an own station and an opposite station.

In a case where monitoring light in the same wavelength band is used, both of monitoring light for the uplink line and monitoring light for the downlink line are reflected by each of the wavelength selective reflection device for the uplink line and the wavelength selective reflection device for the downlink line. Consequently, a state (multiple reflections) in which monitoring light returns in a multiple manner in an optical transmission path occurs. When a state in which monitoring light returns in a multiple manner as described above occurs, oscillation of an optical signal, confusion of monitoring measurement data, and the like may occur, and it becomes difficult to monitor a state of an optical transmission path.

As described above, there is a problem, in an optical transmission system, that it is difficult to monitor a state of an optical transmission path, while minimizing a usage band of monitoring light.

An exemplary object of the invention is to provide an optical control apparatus and an optical transmission path monitoring method that solve a problem being the above-described problem that it is difficult to monitor a state of an optical transmission path, while minimizing a usage band of monitoring light in an optical transmission system.

An optical control apparatus according to an exemplary example embodiment of the present disclosure includes: a first connection means to be connected to a first optical transmission path and a second optical transmission path; a second connection means to be connected to the first optical transmission path and the second optical transmission path; and a route setting means for complementarily setting a first optical route in the first connection means and a second optical route in the second connection means to either of a conductive state and a non-conductive state.

An optical transmission path monitoring method according to an exemplary example embodiment of the present disclosure includes: sending, to a first optical transmission path, an instruction signal for instructing an optical control apparatus to achieve a loopback state in which monitoring light propagating through the first optical transmission path returns through a second optical transmission path; sending a confirmation signal to the first optical transmission path; determining, from a response to the confirmation signal, whether the optical control apparatus is in the loopback state; in a case of determining that one of the optical control apparatuses is not in the loopback state, resending the instruction signal to the first optical transmission path after elapse of a predetermined time; and in a case of determining that all of the optical control apparatuses are in the loopback state, sending the monitoring light to the first optical transmission path.

In an optical control apparatus and an optical transmission path monitoring method according to an exemplary example embodiment of the present disclosure, it is possible to monitor a state of an optical transmission path, while minimizing a usage band of monitoring light in an optical transmission system.

### BRIEF DESCRIPTION OF THE DRAWINGS

Exemplary features and advantages of the present disclosure will become apparent from the following detailed description when taken with the accompanying drawings in which:
Fig. 1 is a block diagram illustrating a configuration of an optical control apparatus according to a first example embodiment of the present disclosure;
Fig. 2A is a diagram illustrating a case in which the optical control apparatus according to the first example embodiment of the present disclosure is in a first returning state;
Fig. 2B is a diagram illustrating a case in which the optical control apparatus according to the first example embodiment of the present disclosure is in a second returning state;
Fig. 3 is a block diagram illustrating another configuration of the optical control apparatus according to the first example embodiment of the present disclosure;
Fig. 4 is a block diagram illustrating yet another configuration of the optical control apparatus according to the first example embodiment of the present disclosure;
Fig. 5 is a block diagram illustrating still another configuration of the optical control apparatus according to the first example embodiment of the present disclosure;
Fig. 6 is a block diagram illustrating a configuration of an optical transmission path monitoring system according to a second example embodiment of the present disclosure;
Fig. 7 is a flowchart illustrating an optical transmission path monitoring method according to the second example embodiment of the present disclosure;
Fig. 8A is a diagram illustrating a loopback state to be set by the optical transmission path monitoring method according to the second example embodiment of the present disclosure;
Fig. 8B is a diagram illustrating a loopback state to be set by the optical transmission path monitoring method according to the second example embodiment of the present disclosure;
Fig. 9 is a flowchart illustrating another optical transmission path monitoring method according to the second example embodiment of the present disclosure;
Fig. 10 is a block diagram illustrating a configuration of an optical control apparatus according to a third example embodiment of the present disclosure;
Fig. 11 is a flowchart illustrating an optical transmission path monitoring method according to the third example embodiment of the present disclosure; and
Fig. 12 is a flowchart illustrating another optical transmission path monitoring method according to the third example embodiment of the present disclosure.

### EXAMPLE EMBODIMENT

Hereinafter, example embodiments according to the present disclosure are described with reference to the drawings.

### [First Example Embodiment]

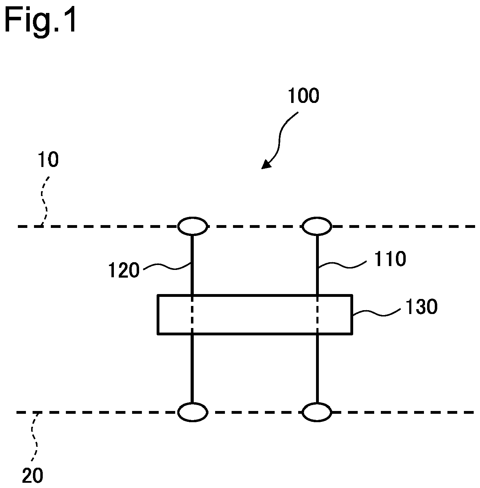

Fig. 1 is a block diagram illustrating a configuration of an optical control apparatus 100 according to a first example embodiment of the present disclosure. The optical control apparatus 100 includes a first connection unit (first connection means) 110, a second connection unit (second connection means) 120, and a route setting unit (route setting means) 130. The optical control apparatus 100 is preferably used in a long distance optical transmission system such as a submarine optical transmission system.

The first connection unit 110 is connected to a first optical transmission path 10 and a second optical transmission path 20. Likewise, the second connection unit 120 is connected to the first optical transmission path 10 and the second optical transmission path 20. Further, the route setting unit 130 complementarily sets a first optical route in the first connection unit 110 and a second optical route in the second connection unit 120 to either of a conductive state and a non-conductive state.

By configuring as described above, in the optical control apparatus 100 according to the present example embodiment, an optical signal that has propagated through the first optical transmission path 10 is able to return and propagate through the second optical transmission path 20. Likewise, an optical signal that has propagated through the second optical transmission path 20 is able to return and propagate through the first optical transmission path 10. This enables to monitor a state of the first optical transmission path 10 and the second optical transmission path 20.

At this time, in the optical control apparatus 100 according to the present example embodiment, the route setting unit 130 is configured to complementarily set the first optical route and the second optical route to either of the conductive state and the non-conductive state. Therefore, even when a wavelength of an optical signal propagating through each of the first optical transmission path 10 and the second optical transmission path 20 is the same, it is possible to avoid a state in which an optical signal returns in a multiple manner within the optical control apparatus 100. Specifically, in the optical control apparatus 100 according to the present example embodiment, it is possible to monitor a state of an optical transmission path, while minimizing a usage band of monitoring light in an optical transmission system.

Herein, each of the first connection unit 110 and the second connection unit 120 includes at least one of an optical coupler and an optical circulator, and an optical fiber.

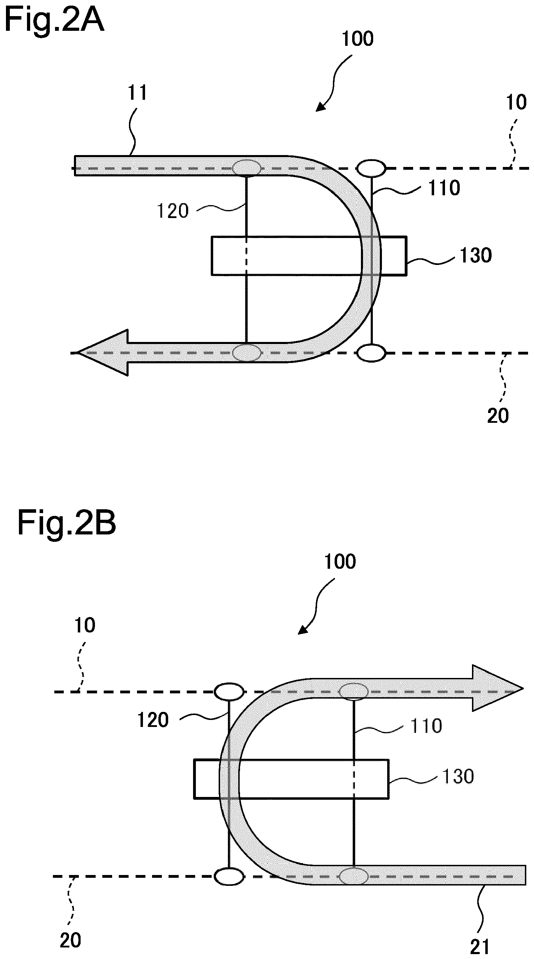

The route setting unit 130 can be configured to set the first optical route and the second optical route in such a way as to achieve either of a first returning state illustrated in Fig. 2A, and a second returning state illustrated in Fig. 2B.

As illustrated in Fig. 2A, in the first returning state, first monitoring light 11 that has propagated through the first optical transmission path 10 returns to a sending side of the first monitoring light 11 via the second optical transmission path 20. At this time, the first optical route in the first connection unit 110 is in the conductive state, and the second optical route in the second connection unit 120 complementarily becomes the non-conductive state. Therefore, there is no likelihood that the first monitoring light 11 returns in a multiple manner within the optical control apparatus 100.

Further, as illustrated in Fig. 2B, in the second returning state, second monitoring light 21 that has propagated through the second optical path 20 in a direction opposite to a direction of the first monitoring light 11 returns to a sending side of the second monitoring light 21 via the first optical transmission path 10. At this time, the second optical route in the second connection unit 120 is in the conductive state, and the first optical route in the first connection unit 110 complementarily becomes the non-conductive state. Therefore, also in this case, there is no likelihood that the second monitoring light 21 returns in a multiple manner within the optical control apparatus 100.

Note that, a wavelength of the first monitoring light 11, and a wavelength of the second monitoring light 21 can belong to a same wavelength band.

Next, the optical control apparatus according to the present example embodiment is described in further detail.

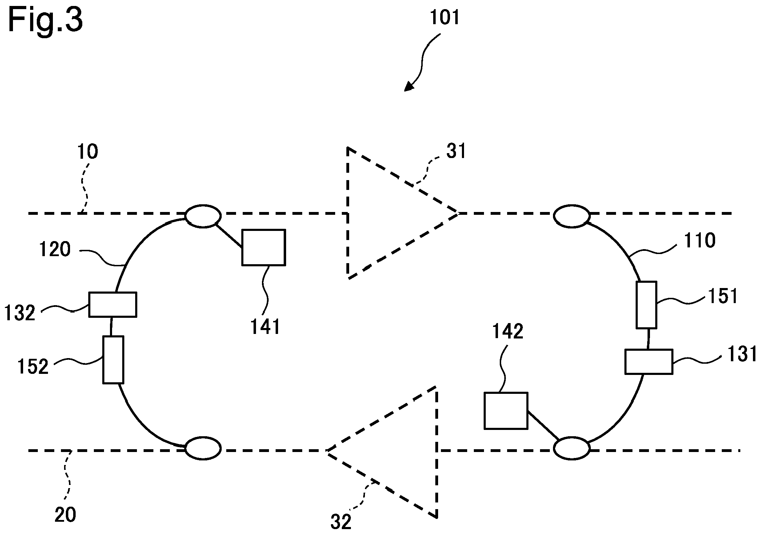

As exemplified by an optical control apparatus 101 illustrated in Fig. 3, the route setting unit 130 can be configured to include a first optical switching unit (first optical switching means) 131 and a second optical switching unit (second optical switching means) 132.

Herein, the first optical switching unit 131 switches, in the first optical route, to either of a passing state in which first monitoring light and second monitoring light are passed, and a blocking state in which first monitoring light and second monitoring light are blocked. Likewise, the second optical switching unit 132 switches, in the second optical route, to either of the passing state and the blocking state. At this time, the first optical switching unit 131 and the second optical switching unit 132 are complementarily operated, and when one of the first and second optical switching units 131 and 132 is switched to the passing state, the other is switched to the blocking state. Typically, an optical switch can be used as the first optical switching unit 131 and the second optical switching unit 132.

As illustrated in Fig. 3, the optical control apparatus 101 can be configured to include a first switching control unit (first switching control means) 141, and a second switching control unit (second switching control means) 142.

Herein, when accepting a first switching control signal that has propagated through the first optical transmission path 10, the first switching control unit 141 sets the first optical switching unit 131 to the passing state, and sets the second optical switching unit 132 to the blocking state. This allows, as illustrated in Fig. 2A, the first monitoring light 11 that has propagated through the first optical transmission path 10 to return to the sending side of the first monitoring light 11 via the second optical transmission path 20.

Further, when accepting a second switching control signal that has propagated through the second optical transmission path 20, the second switching control unit 142 sets the first optical switching unit 131 to the blocking state, and sets the second optical switching unit 132 to the passing state. This allows, as illustrated in Fig. 2B, the second monitoring light 21 that has propagated through the second optical transmission path 20 in a direction opposite to a direction of the first monitoring light 11 to return to the sending side of the second monitoring light 21 via the first optical transmission path 10.

Fig. 3 jointly illustrates a first optical amplification unit (first optical amplification means) 31 that amplifies first propagating light propagating through the first optical transmission path 10, and a second amplification unit (second optical amplification means) 32 that amplifies second propagating light propagating through the second optical transmission path 20. In this way, an optical repeater apparatus constituted of the first optical amplification unit 31 and the second optical amplification unit 32 can be configured to include the optical control apparatus 101.

The optical control apparatus according to the present example embodiment can be configured to further include a first band control unit (first band control means) and a second band control unit (second band control means). The first band control unit is located on an optical route in the first optical route and passing through the first optical switching unit 131, and has, as a control band, a wavelength band of the first monitoring light and the second monitoring light. Further, the second band control unit is located on an optical route in the second optical route and passing through the second optical switching unit 132, and has the above-described control band. By the first band control unit and the second band control unit, it is possible to separate the first monitoring light and the second monitoring light from a main signal light.

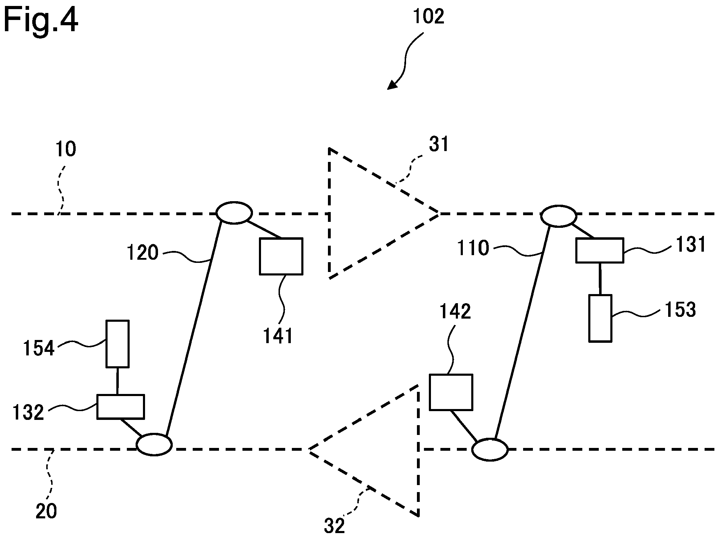

Fig. 3 illustrates a configuration including a first band control unit 151 and a second band control unit 152 using a bandpass filter in which the above-described control band is a passband. The present example embodiment is not limited to the above, and as exemplified by an optical control apparatus 102 illustrated in Fig. 4, it is also possible to configure to include a first band control unit 153 and a second band control unit 154 using a wavelength selective reflection filter in which the above-described control band is a reflection band.

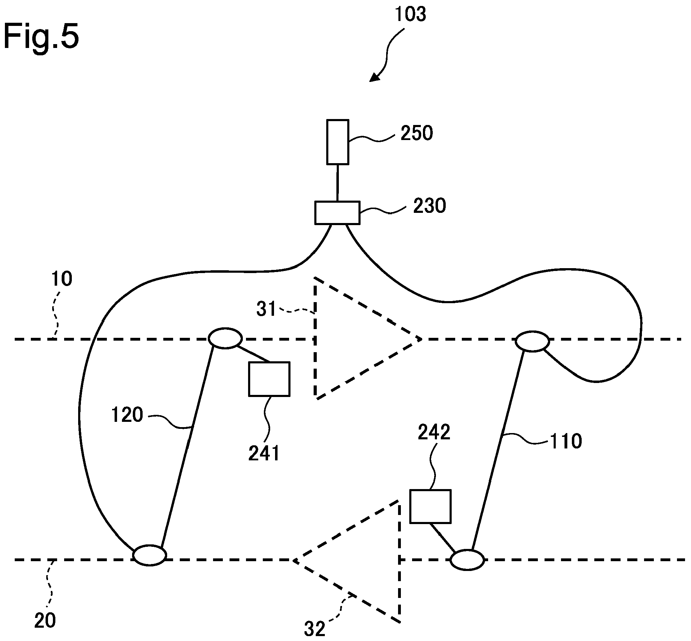

In a case of using a wavelength selective reflection filter, it is possible to configure in such a way that a first optical switching unit and a second optical switching unit are shared. Fig. 5 illustrates a configuration of an optical control apparatus 103 in which an optical switching unit is shared as described above.

The optical control apparatus 103 includes, as a route setting unit (route setting means), a wavelength selective reflection unit (wavelength selective reflection means) 250, and a route switching unit (route switching means) 230. The wavelength selective reflection unit 250 has a wavelength band of the first monitoring light and the second monitoring light, as a reflection band. Therefore, the wavelength selective reflection unit 250 reflects only the first monitoring light and the second monitoring light among the main signal light, the first monitoring light, and the second monitoring light. The route switching unit 230 switches to either of a first route state in which the wavelength selective reflection unit 250 is included in the first optical route, and a second route state in which the wavelength selective reflection unit 250 is included in the second optical route. Typically, a direction switching switch can be used as the route switching unit 230.

As illustrated in Fig. 5, the optical control apparatus 103 can be configured to include, as a route setting unit (route setting means), a first route control unit (first route control means) 241, and a second route control unit (second route control means) 242.

Herein, when accepting a first switching control signal that has propagated through the first optical transmission path 10, the first route control unit 241 sets the route switching unit 230 to the first route state. This allows the first monitoring light 11 that has propagated through the first optical transmission path 10 to return to the sending side of the first monitoring light 11 via the second optical transmission path 20 (see Fig. 2A).

Further, when accepting a second switching control signal that has propagated through the second optical transmission path 20, the second route control unit 242 sets the route switching unit 230 to the second route state. This allows the second monitoring light 21 that has propagated through the second optical transmission path 20 in a direction opposite to a direction of the first monitoring light 11 to return to the sending side of the second monitoring light 21 via the first optical transmission path 10 (see Fig. 2B).

Figs. 3 to 5 illustrate a configuration in which each of the first switching control unit 141 or the first route control unit 241 is disposed on an input side of the first optical amplification unit 31, and, the second switching control unit 142 or the second route control unit 242 is disposed on an input side of the second optical amplification unit 32. However, the example embodiment is not limited to the above, and it is also possible to configure in such a way that each of the first switching control unit 141, the second switching control unit 142, the first route control unit 241, and the second route control unit 242 is disposed on an output side of the first optical amplification unit 31 and the second optical amplification unit 32.

Next, an optical route control method according to the present example embodiment is described.

In the optical route control method according to the present example embodiment, the first optical route to be connected to the first optical transmission path and the second optical transmission path, and the second optical route to be connected to the first optical transmission path and the second optical transmission path are complementarily set to either of the conductive state and the non-conductive state. This enables to avoid a state in which an optical signal returns in a multiple manner, even when a wavelength of an optical signal propagating through each of the first optical transmission path and the second optical transmission path is the same.

Herein, setting the first optical route and the second optical route includes either of the following first setting and second setting. In the first setting, first monitoring light that has propagated through the first optical transmission path is set in such a way as to return to the sending side of the first monitoring light via the second optical transmission path. In the second setting, second monitoring light that has propagated through the second optical transmission path in a direction opposite to a direction of the first monitoring light is set in such a way as to return to the sending side of the second monitoring light via the first optical transmission path. This enables to monitor a state of the first optical transmission path and the second optical transmission path.

When setting the first optical route and the second optical route, it is possible to switch to either of the passing state and the blocking state in the first optical route, and switch to either of the passing state and the blocking state in the second optical route. Herein, in the passing state, the first monitoring light and the second monitoring light are allowed to pass. Further, in the blocking state, the first monitoring light and the second monitoring light are blocked. Further, when one of the first optical route and the second optical route is switched to the passing state, it is possible to switch the other to the blocking state.

Further, when setting the first optical route and the second optical route, it may be possible to switch to either of the following first route state and second route state. Herein, in the first route state, the first monitoring light is reflected in the first optical route. Further, in the second route state, the second monitoring light is reflected in the second optical route.

As described above, in the optical control apparatuses 100, 101, 102, and 103, and the optical route control method according to the present example embodiment, it is possible to monitor a state of an optical transmission path, while minimizing a usage band of monitoring light in an optical transmission system.

### [Second Example Embodiment]

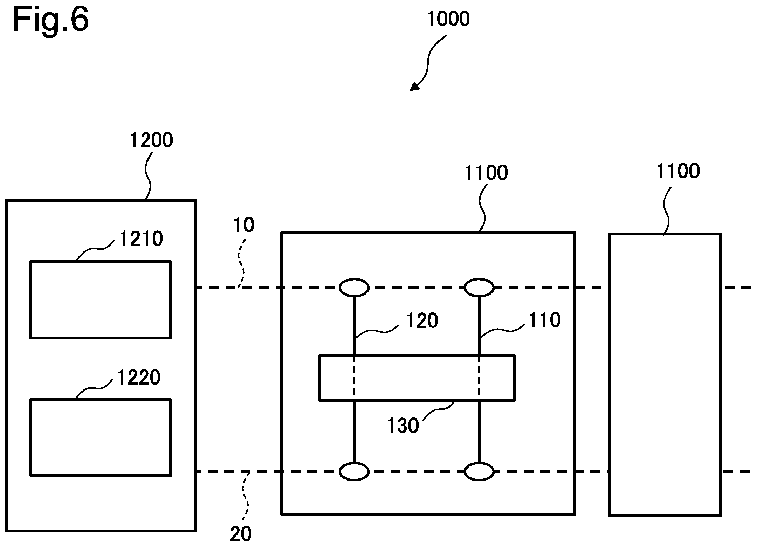

Next, a second example embodiment according to the present disclosure is described. Fig. 6 illustrates a configuration of an optical transmission path monitoring system 1000 according to the present example embodiment. The optical transmission path monitoring system 1000 includes an optical control apparatus 1100 and a monitoring apparatus 1200. The optical transmission path monitoring system 1000 is preferably used in a long distance optical transmission system such as a submarine optical transmission system. Therefore, typically, as illustrated in Fig. 6, the optical transmission path monitoring system 1000 has a configuration including a plurality of optical control apparatuses 1100.

One of the optical control apparatuses 101, 102, and 103 according to the first example embodiment can be used as the optical control apparatus 1100. Specifically, the optical control apparatus 1100 includes a first connection unit 110, a second connection unit 120, and a route setting unit 130. The first connection unit 110 is connected to a first optical transmission path 10 and a second optical transmission path 20. Likewise, the second connection unit 120 is connected to the first optical transmission 10 and the second optical transmission path 20. Further, the route setting unit 130 complementarily sets a first optical route in the first connection unit 110 and a second optical route in the second connection unit 120 to either of the conductive state and the non-conductive state. Therefore, even when a wavelength of an optical signal propagating through the first optical transmission path 10 and a wavelength of an optical signal propagating through the second optical transmission path 20 is the same, it is possible to avoid a state in which an optical signal returns in a multiple manner within the optical control apparatus 1100.

Herein, the route setting unit 130 sets in such a way that, when accepting a first switching control signal that has propagated through the first optical transmission path 10, first monitoring light 11 that has propagated through the first optical transmission path 10 returns to a sending side of the first monitoring light 11 via the second optical transmission path 20 (see Fig. 2A). Further, the route setting unit 130 sets in such a way that, when accepting a second switching control signal that has propagated through the second optical transmission path 20, second monitoring light 21 that has propagated through the second optical transmission path 20 in a direction opposite to a direction of the first monitoring light 11 returns to a sending side of the second monitoring light 21 via the first optical transmission path 10 (see Fig. 2B).

The monitoring apparatus 1200 includes a light sending unit (light sending means) 1210, and a control unit (control means) 1220.

The light sending unit 1210 sends, to the first optical transmission path 10, one of a first switching control signal, first monitoring light, and a confirmation signal.

The control unit 1220 determines, from a response to the confirmation signal, whether the optical control apparatus 1100 is in a loopback state in which the optical control apparatus 1100 returns the first monitoring light. In a case where it is determined that one of the optical control apparatuses 1100 is not in the loopback state, the control unit 1220 control the light sending unit 1210 in such a way as to resend the first switching control signal to the first optical transmission path 10 after elapse of a predetermined time. On the other hand, in a case where it is determined that all of the optical control apparatuses 1100 are in the loopback state, the control unit 1220 controls the light sending unit 1210 in such a way as to send the first monitoring light to the first optical transmission path 10. This enables to monitor a state of the first optical transmission path 10 and the second optical transmission path 20.

In this way, in the optical transmission path monitoring system 1000 according to the present example embodiment, it is possible to monitor a state of an optical transmission path, while minimizing a usage band of monitoring light in an optical transmission system.

It is possible to configure in such a way that the control unit 1220 controls the light sending unit 1210 not to send the first switching control signal in the following case. Specifically, in a case where the light sending unit 1210 accepts an optical signal from the opposite side via the second optical transmission path 20, when the light sending unit 1210 sends neither the first switching control signal, the first monitoring light, nor the confirmation signal, the control unit 1220 controls the light sending unit 1210 not to send the first switching control signal. This enables to avoid conflict of an optical signal due to performing monitoring measurement also on the own station side, when the opposite side is performing monitoring measurement by using the second monitoring light.

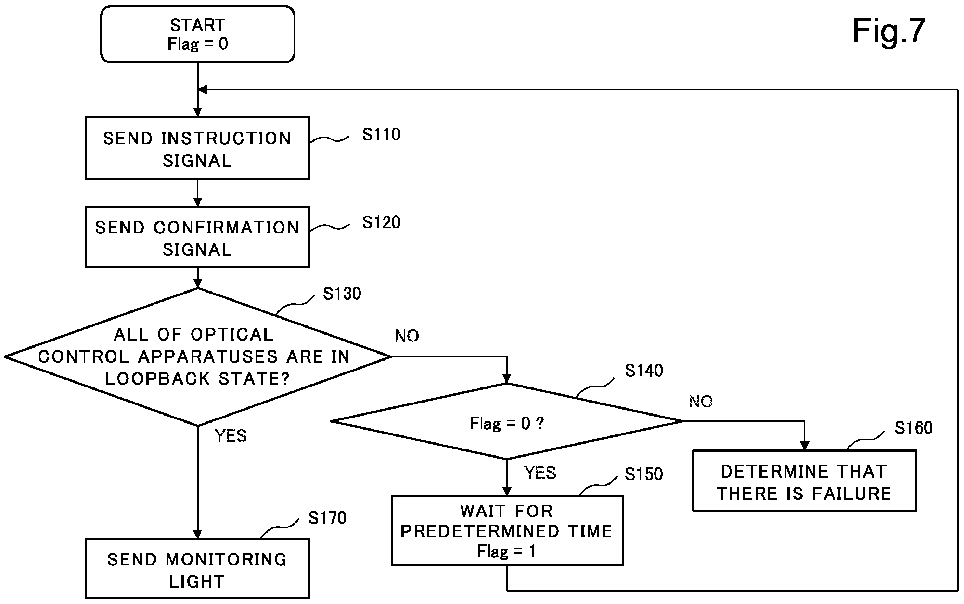

Next, an optical transmission path monitoring method according to the present example embodiment is described by using a flowchart illustrated in Fig. 7.

In the optical transmission path monitoring method according to the present example embodiment, first, an instruction signal of instructing an optical control apparatus to achieve a loopback state in which monitoring light propagating through the first optical transmission path returns through the second optical transmission path is sent to the first optical transmission path (step S110). This instruction signal is typically an optical pulse signal. A wavelength of the instruction signal may be the same as a wavelength of monitoring light for use in monitoring an optical transmission path.

Subsequently, a confirmation signal is sent to the first optical transmission path (step S120). In a case where a switching state of the optical control apparatus is retained for a predetermined time, it is possible to use, as the confirmation signal, an optical pulse signal similar to an instruction signal.

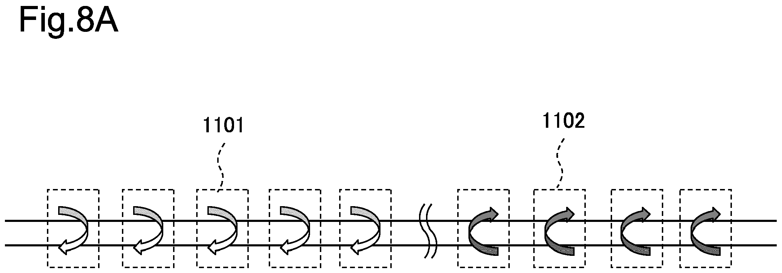

Then, it is determined, from a response to the confirmation signal, whether the optical control apparatus is in the loopback state (step S130). At this time, as illustrated in Fig. 8A, a confirmation signal (optical pulse signal) is returned from an optical control apparatus 1101 that is switched to the loopback state in which light returns to the own station side. However, the confirmation signal (optical pulse signal) is not returned from an optical control apparatus 1102 that is not switched to the loopback state in which light returns to the own station side. This is because, in a case where a monitoring operation of an optical transmission path is performed in each of the own station and the opposite station, the loopback state of the optical control apparatus is individually and independently set by an instruction signal to be sent from each station.

In a case where it is determined that one of the optical control apparatuses is not in the loopback state (step S130/NO), it is determined whether a flag (Flag) being set to 0 when processing is started is kept to 0 (step S140).

In a case where the flag (Flag) is kept to 0 (step S140/YES), after elapse of a predetermined time (S150), the instruction signal is resent to the first optical transmission path (step S110). Then, the flag (Flag) is set to "1". Herein, setting the predetermined time to a different value between the own station and the opposite station enables to shift a timing at which the instruction signal is resent. This enables to avoid that the loopback state of the optical control apparatus is individually reset by an instruction signal from each of the own station and the opposite station.

A case in which the flag (Flag) is "1" (step S140/NO) is a case in which a confirmation signal is not returned, regardless that the loopback state of the optical control apparatus is set in a state that an instruction signal does not conflict by resetting processing. Therefore, in this case, processing is finished by determining that there is a failure in an optical transmission path (step S160).

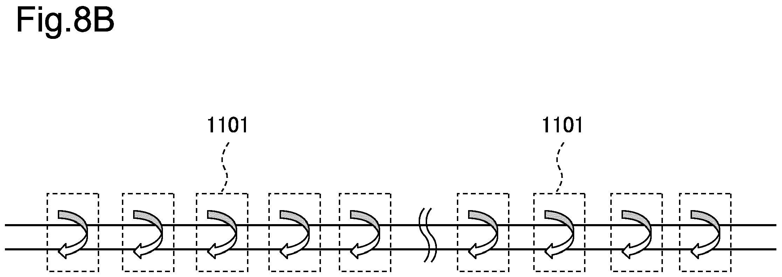

On the other hand, as illustrated in Fig. 8B, in a case where a confirmation signal is returned from all of the optical control apparatuses 1101, it is determined that all of the optical control apparatuses are in the loopback state (step S130/YES). In this case, monitoring light is sent to the first optical transmission path (step S170). This enables to perform monitoring of the optical transmission path.

In this way, in the optical transmission path monitoring method according to the present example embodiment, after sending an instruction signal, a confirmation signal is sent, and the loopback state of the optical control apparatus is reset according to the sending result. This enables to avoid conflict of monitoring light, even in a case where time information is not shared between the own station and the opposite station.

Note that, a confirmation signal is sent to the first optical transmission path (step S 120). In a case where it is obviously unnecessary to confirm a state of an optical control apparatus, the step may be omitted.

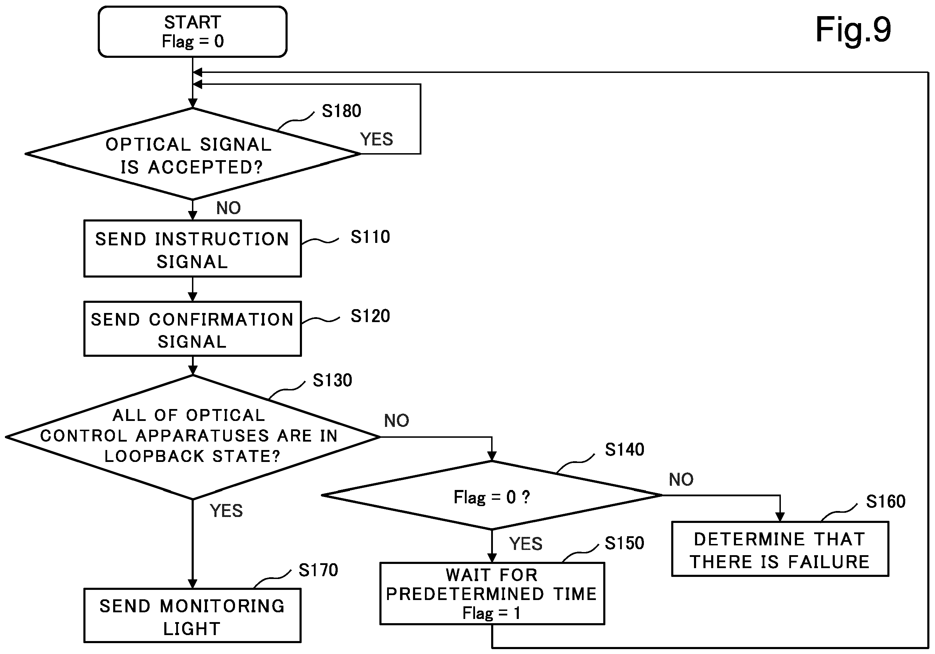

As illustrated in Fig. 9, in the optical transmission path monitoring method according to the present example embodiment, when neither the instruction signal, the confirmation signal, nor the monitoring light is sent, it may be possible to determine whether an optical signal is accepted from the opposite side via the second optical transmission path (step S 180). Herein, in a case where an optical signal is accepted from the opposite side (step S180/YES), an instruction signal is not sent. This enables to avoid conflict of an optical signal due to performing monitoring measurement also on the own station side, when the opposite side is performing monitoring measurement.

On the other hand, in a case where it is determined that an optical signal is not accepted from the opposite side, when neither the instruction signal, the confirmation signal, nor the monitoring light is sent (step S 180/NO), the instruction signal is sent (step S110), and the above-described processing is proceeded.

As described above, in the optical transmission path monitoring system 1000 and the optical transmission path monitoring method according to the present example embodiment, it is possible to monitor a state of an optical transmission path, while minimizing a usage band of monitoring light in the optical transmission system.

### [Third Example Embodiment]

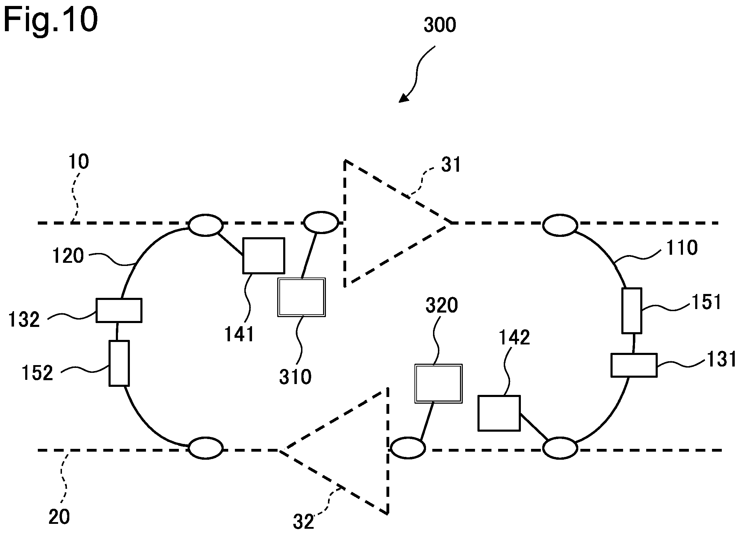

Next, a third example embodiment according to the present disclosure is described. Fig. 10 illustrates a configuration of an optical control apparatus 300 according to the present example embodiment.

The optical control apparatus 300 includes a first connection unit (first connection means) 110, a second connection unit (second connection means) 120, and a route setting unit (route setting means). Fig. 10 illustrates a configuration including, as the route setting unit (route setting means), a first optical switching unit (first optical switching means) 131 and a second optical switching unit (second optical switching means) 132.

The first connection unit 110 is connected to a first optical transmission path 10 and a second optical transmission path 20. Likewise, the second connection unit 120 is connected to the first optical transmission path 10 and the second optical transmission path 20. Further, the route setting unit complementarily sets a first optical route in the first connection unit 110 and a second optical route in the second connection unit 120 to either of a conductive state and a non-conductive state.

By configuring as described above, in the optical control apparatus 300 according to the present example embodiment, it is possible to avoid a state in which an optical signal returns in a multiple manner within the optical control apparatus 300, even when a wavelength of an optical signal propagating through each of the first optical transmission path 10 and the second optical transmission path 20 is the same.

Herein, when accepting a first switching control signal that has propagated through the first optical transmission path 10, the route setting unit sets in such a way that first monitoring light 11 that has propagated through the first optical transmission path 10 returns to a sending side of the first monitoring light 11 via the second optical transmission path 20 (see Fig. 2A). Further, when accepting a second switching control signal that has propagated through the second optical transmission path 20, the route setting unit sets in such a way that second propagating light 21 that has propagated through the second optical transmission path 20 in a direction opposite to a direction of the first monitoring light 11 returns to a sending side of the second monitoring light 21 via the first optical transmission path 10 (see Fig. 2B).

Fig. 10 illustrates a configuration in which the optical control apparatus 300 further includes a first switching control unit (first switching control means) 141, a second switching control unit (second switching control means) 142, a first band control unit 151, and a second band control unit 152. The configuration described above is similar to the configuration of the optical control apparatus 101 according to the first example embodiment.

The optical control apparatus 300 according to the present example embodiment is configured to further include a first setting information sending unit (first setting information sending means) 310, and a second setting information sending unit (second setting information sending means) 320. Herein, the first setting information sending unit 310 sends, to a sending source of the first monitoring light, setting information relating to the first optical route and the second optical route set by the route setting unit. Further, the setting information sending unit 320 sends the setting information to a sending source of the second monitoring light.

By configuring as described above, a monitoring apparatus of an own station being the sending source of the first monitoring light, and a monitoring apparatus of an opposite station being the sending source of the second monitoring light can acquire setting information relating to the first optical route and the second optical route in the optical control apparatus 300.

The setting information includes information indicating whether the first optical route and the second optical route are in either of the conductive state and the non-conductive state, specifically, indicating whether the optical control apparatus 300 is in a state (loopback state) in which the optical control apparatus 300 returns monitoring light to the own station side. The setting information further includes identification information such as a serial number of the optical control apparatus 300. Therefore, the monitoring apparatus can recognize which one of the optical control apparatuses 300 returns monitoring light to the own station.

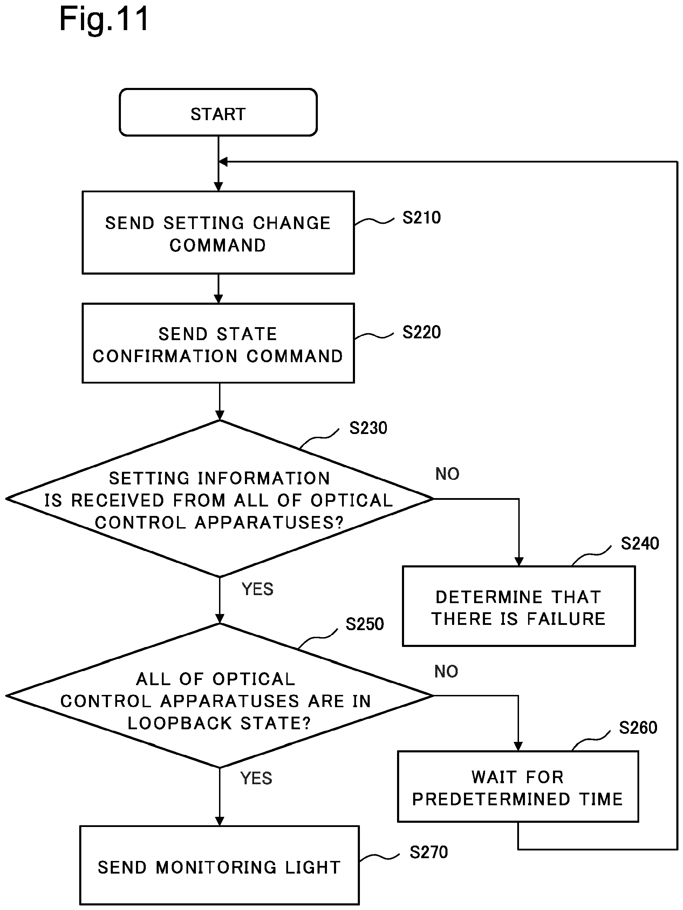

Next, an optical transmission path monitoring method according to the present example embodiment is described by using a flowchart illustrated in Fig. 11.

In the optical transmission path monitoring method according to the present example embodiment, first, an instruction signal of instructing an optical control apparatus to achieve a loopback state in which monitoring light propagating through the first optical transmission path returns through the second optical transmission path is sent to the first optical transmission path. In the optical transmission path monitoring method according to the present example embodiment, a setting change command of the optical control apparatus is sent as an instruction signal (step S210). By the setting change command, each optical control apparatus is switched to a state in which monitoring light is looped back to a monitoring apparatus that has sent the setting change command.

Subsequently, a state confirmation command is sent to the first optical transmission path, as a confirmation signal (step S220). Then, it is confirmed, as a response to the state confirmation command, whether setting information is received from all of the optical control apparatuses (step S230). The setting information includes information as to whether the optical control apparatus is in the loopback state.

In a case where an optical control apparatus that has not received the setting information is present (step S230/NO), the processing is finished by determining that there is a failure in the optical transmission path (step S240).

On the other hand, in a case where the setting information is received from all of the optical control apparatuses (step S230/YES), it is determined, from the setting information, whether the optical control apparatus is in the loopback state (step S250).

In a case where it is determined that one of the optical control apparatuses is not in the loopback state (step S250/NO), the setting change command is resent to the first optical transmission path (step S210), after an elapse of a predetermined time (step S260). Herein, it is possible to shift a timing at which the setting change command is resent by setting the predetermined time to a different value between the own station and the opposite station. This enables to avoid that the loopback state of the optical control apparatus is individually reset by the setting change command from each of the own station and the opposite station.

On the other hand, in a case where it is determined that all of the optical control apparatuses are in the loopback state from the setting information (step S250/YES), monitoring light is sent to the first optical transmission path (step S270). This enables to perform monitoring of the optical transmission path.

In this way, in the optical transmission path monitoring method according to the present example embodiment, a state confirmation command is sent after a setting change command is sent, and the loopback state of the optical control apparatus is reset by the sending result. This enables to avoid conflict of monitoring light, even in a case where time information is not shared between the own station and the opposite station.

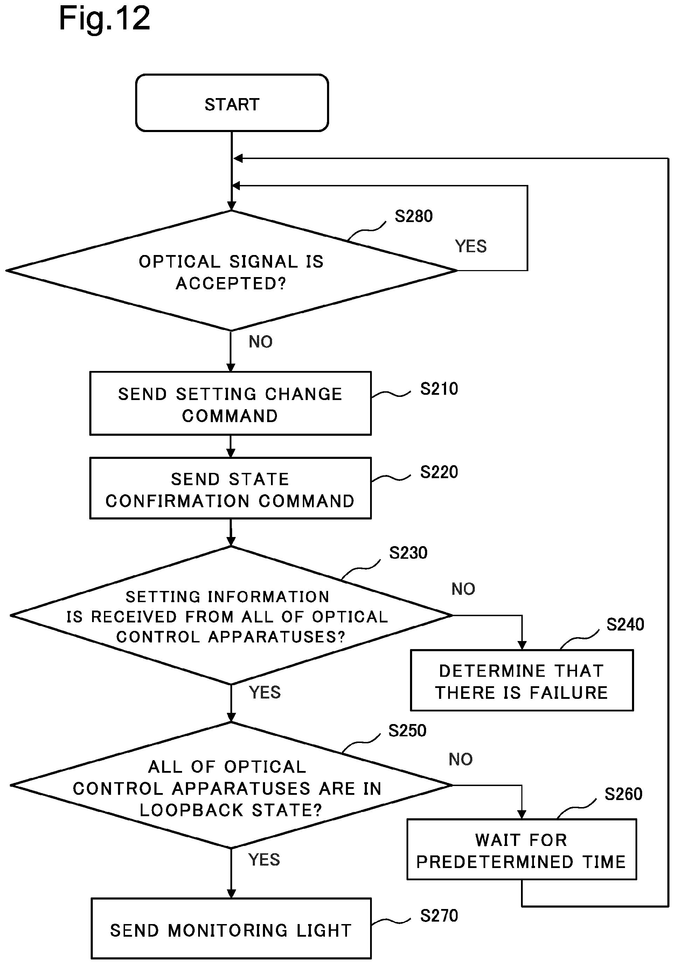

As illustrated in Fig. 12, when neither a setting change command as an instruction signal, a state conformation command as a confirmation signal, nor monitoring light is sent, it may be possible to determine whether an optical signal is accepted from the opposite side via the second optical transmission path (step S280). Herein, in a case where an optical signal is accepted from the opposite side (step S280/YES), a setting change command is not sent. This enables to avoid conflict of an optical signal due to performing monitoring measurement also on the own station side, when the opposite side is performing monitoring measurement.

On the other hand, in a case where it is determined that an optical signal is not accepted from the opposite side, when neither a setting change command, a state confirmation command, nor monitoring light is sent (step S280/NO), the setting change command is sent (step S210), and the above-described processing is proceeded.

As described above, in the optical control apparatus 300 and the optical transmission path monitoring method according to the present example embodiment, it is possible to monitor a state of an optical transmission path in the optical transmission system, while minimizing a usage band of monitoring light.

A part or all of the above-described example embodiments may also be described as the following supplementary notes, but are not limited to the following.

(Supplementary note 1) An optical control apparatus including: a first connection means to be connected to a first optical transmission path and a second optical transmission path; a second connection means to be connected to the first optical transmission path and the second optical transmission path; and a route setting means for complementarily setting a first optical route in the first connection means and a second optical route in the second connection means to either of a conductive state and a non-conductive state.

(Supplementary note 2) The optical control apparatus according to supplementary note 1, wherein the route setting means sets the first optical route and the second optical route to either of a first returning state in which first monitoring light propagating through the first optical transmission path returns to a sending side of the first monitoring light via the second optical transmission path, and a second returning state in which second monitoring light propagating through the second optical transmission path in a direction opposite to a direction of the first monitoring light returns to a sending side of the second monitoring light via the first optical transmission path.

(Supplementary note 3) The optical control apparatus according to supplementary note 2, wherein the route setting means includes a first optical switching means for switching, in the first optical route, to either of a passing state in which the first monitoring light and the second monitoring light are allowed to pass, and a blocking state in which the first monitoring light and the second monitoring light are blocked, and a second optical switching means for switching, in the second optical route, to either of the passing state and the blocking state. The first optical switching means and the second optical switching means are complementarily operated, and when one of the first optical switching means and the second optical switching means is switched to the passing state, another is switched to the blocking state.

(Supplementary note 4) The optical control apparatus according to supplementary note 3, wherein the route setting means includes a first switching control means and a second switching control means. When accepting a first switching control signal propagating through the first optical transmission path, the first switching control means sets the first optical switching means to the passing state, and sets the second optical switching means to the blocking state. When accepting a second switching control signal propagating through the second optical transmission path, the second switching control means sets the first optical switching means to the blocking state, and sets the second optical switching means to the passing state.

(Supplementary note 5) The optical control apparatus according to supplementary note 4, further including; a first band control means, being provided in an optical route passing through the first optical switching means in the first optical route, for having, as a control band, a wavelength band of the first monitoring light and the second monitoring light; and a second band control means, being provided in an optical route passing through the second optical switching means in the second optical route, for having the control band.

(Supplementary note 6) The optical control apparatus according to supplementary note 2, wherein the route setting means includes: a wavelength selective reflection means for having, as a reflection band, a wavelength band of the first monitoring light and the second monitoring light; and a route switching means for switching to either of a first route state in which the wavelength selective reflection means is included in the first optical route, and a second route state in which the wavelength selective reflection means is included in the second optical route.

(Supplementary note 7) The optical control apparatus according to supplementary note 6, wherein the route setting means includes a first route control means for setting, when accepting a first switching control signal propagating through the first optical transmission path, the route switching means to the first route state, and a second route control means for setting, when accepting a second switching control signal propagating through the second optical transmission path, the route switching means to the second route state.

(Supplementary note 8) The optical control apparatus according to any one of supplementary notes 2 to 7, further including: a first setting information sending means for sending, to a sending source of the first monitoring light, setting information relating to the first optical route and the second optical route being set by the route setting means; and a second setting information sending means for sending, to a sending source of the second monitoring light, the setting information.

(Supplementary note 9) An optical transmission path monitoring method including: sending, to a first optical transmission path, an instruction signal for instructing to an optical control apparatus to achieve a loopback state in which monitoring light propagating through the first optical transmission path returns through a second optical transmission path; sending a confirmation signal to the first optical transmission path; determining, from a response to the confirmation signal, whether the optical control apparatus is in the loopback state; in a case of determining that one of the optical control apparatuses is not in the loopback state, resending the instruction signal to the first optical transmission path after elapse of a predetermined time; and in a case of determining that all of the optical control apparatuses are in the loopback state, sending the monitoring light to the first optical transmission path.

(Supplementary note 10) The optical transmission path monitoring method according to supplementary note 9, further including, not sending the instruction signal, in a case where an optical signal is accepted via the second optical transmission path from an opposite side, when neither the instruction signal, the confirmation signal, nor the monitoring light is sent.

(Supplementary note 11) The optical control apparatus according to supplementary note 5, wherein the first band control means and the second band control means are a bandpass filter in which the control band is a passband.

(Supplementary note 12) The optical control apparatus according to supplementary note 5, wherein the first band control means and the second band control means are a wavelength selective reflection filter in which the control band is a reflection band.

(Supplementary note 13) The optical control apparatus according to any one of supplementary notes 1 to 7, 11, and 12, wherein each of the first connection means and the second connection means includes at least one of an optical coupler and an optical circulator, and an optical fiber.

(Supplementary note 14) The optical control apparatus according to any one of supplementary notes 2 to 7, 11, and 12, wherein a wavelength of the first monitoring light, and a wavelength of the second monitoring light belong to a same wavelength band.

(Supplementary note 15) An optical repeater apparatus including: the optical control apparatus according to any one of supplementary notes 1 to 7, 11, and 12; a first optical amplification means for amplifying first propagating light propagating through the first optical transmission path; and a second optical amplification means for amplifying second propagating light propagating through the second optical transmission path.

(Supplementary note 16) An optical transmission path monitoring system including the optical control apparatus according to supplementary note 4 or 7, and a monitoring apparatus. The monitoring apparatus includes: a light sending means for sending, to the first optical transmission path, one of the first switching control signal, the first monitoring light, and a confirmation signal; and a control means. The control means determines, from a response to the confirmation signal, whether the optical control apparatus is in a loopback state in which the first monitoring light is returned. In a case of determining that one of the optical control apparatuses is not in the loopback state, the control means controls the light sending means in such a way that the first switching control signal is resent to the first optical transmission path after elapse of a predetermined time. In a case of determining that all of the optical control apparatuses are in the loopback state, the control means controls the light sending means in such a way as to send the first monitoring light to the first optical transmission path.

(Supplementary note 17) The optical transmission path monitoring system according to supplementary note 16, wherein, in a case of accepting an optical signal from an opposite side via the second optical transmission path when the light sending means sends neither the first switching control signal, the first monitoring light, nor the confirmation signal, the control means controls the light sending means in such a way as not to send the first switching control signal.

(Supplementary note 18) An optical route control method including: complementarily setting a first optical route to be connected to a first optical transmission path and a second optical transmission path, and a second optical route to be connected to the first optical transmission path and the second optical transmission path to either of a conductive state and a non-conductive state. The setting the first optical route and the second optical route includes either of setting first monitoring light propagating through the first optical transmission path in such a way as to return to a sending side of the first monitoring light via the second optical transmission path, and setting second monitoring light propagating through the second optical transmission path in a direction opposite to a direction of the first monitoring light in such a way as to return to a sending side of the second monitoring light via the first optical transmission path.

(Supplementary note 19) The optical route control method according to supplementary note 18, wherein the setting the first optical route and the second optical route includes switching, in the first optical route, to either of a passing state in which the first monitoring light and the second monitoring light are allowed to pass, and a blocking state in which the first monitoring light and the second monitoring light are blocked, switching, in the second optical route, to either of the passing state and the blocking state, and, when one of the first optical route and the second optical route is switched to the passing state, switching another to the blocking state.

(Supplementary note 20) The optical route control method according to supplementary note 18, wherein the setting the first optical route and the second optical route includes switching to either of a first route state in which the first monitoring light is reflected in the first optical route, and a second route state in which the second monitoring light is reflected in the second optical route.

While the disclosure has been particularly shown and described with reference to exemplary embodiments thereof, the disclosure is not limited to these embodiments. It will be understood by those of ordinary skill in the art that various changes in form and details may be made therein without departing from the spirt and scope of the present disclosure as defined by the claims.

### [Reference Signs List]

- 100, 101, 102, 103, 300, 1100: Optical control apparatus
- 110: First connection unit
- 120: Second connection unit
- 130: Route setting unit
- 131: First optical switching unit
- 132: Second optical switching unit
- 141: First switching control unit
- 142: Second switching control unit
- 151, 153: First band control unit
- 152, 154: Second band control unit
- 230: Route switching unit
- 241: First route control unit
- 242: Second route control unit
- 250: Wavelength selective reflection unit
- 310: First setting information sending unit
- 320: Second setting information sending unit
- 1000: Optical transmission path monitoring system
- 1200: Monitoring apparatus
- 1210: Light sending unit
- 1220: Control unit
- 10: First optical transmission path
- 11: First monitoring light
- 20: Second optical transmission path
- 21: Second monitoring light
- 31: First optical amplification unit
- 32: Second optical amplification unit

## Claims

1. An optical control apparatus comprising:
first connection means to be connected to a first optical transmission path and a second optical transmission path;
second connection means to be connected to the first optical transmission path and the second optical transmission path; and
route setting means for complementarily setting a first optical route in the first connection means and a second optical route in the second connection means to either of a conductive state and a non-conductive state.

2. The optical control apparatus according to claim 1, wherein
the route setting means sets the first optical route and the second optical route to either of
a first returning state in which first monitoring light propagating through the first optical transmission path returns to a sending side of the first monitoring light via the second optical transmission path, and
a second returning state in which second monitoring light propagating through the second optical transmission path in a direction opposite to a direction of the first monitoring light returns to a sending side of the second monitoring light via the first optical transmission path.

3. The optical control apparatus according to claim 2, wherein
the route setting means includes
first optical switching means for switching, in the first optical route, to either of a passing state in which the first monitoring light and the second monitoring light are allowed to pass, and a blocking state in which the first monitoring light and the second monitoring light are blocked, and
second optical switching means for switching, in the second optical route, to either of the passing state and the blocking state, and
the first optical switching means and the second optical switching means are complementarily operated, and when one of the first optical switching means and the second optical switching means is switched to the passing state, another is switched to the blocking state.

4. The optical control apparatus according to claim 3, wherein
the route setting means includes first switching control means and second switching control means,
the first switching control means sets the first optical switching means to the passing state, and sets the second optical switching means to the blocking state, when accepting a first switching control signal propagating through the first optical transmission path, and
the second switching control means sets the first optical switching means to the blocking state, and sets the second optical switching means to the passing state, when accepting a second switching control signal propagating through the second optical transmission path.

5. The optical control apparatus according to claim 4, further comprising:
first band control means, being provided in an optical route passing through the first optical switching means in the first optical route, for having, as a control band, a wavelength band of the first monitoring light and the second monitoring light; and
second band control means, being provided in an optical route passing through the second optical switching means in the second optical route, for having the control band.

6. The optical control apparatus according to claim 2, wherein
the route setting means includes
wavelength selective reflection means for having, as a reflection band, a wavelength band of the first monitoring light and the second monitoring light, and
route switching means for switching to either of a first route state in which the wavelength selective reflection means is included in the first optical route, and a second route state in which the wavelength selective reflection means is included in the second optical route.

7. The optical control apparatus according to claim 6, wherein
the route setting means includes
first route control means for setting, when accepting a first switching control signal propagating through the first optical transmission path, the route switching means to the first route state, and
second route control means for setting, when accepting a second switching control signal propagating through the second optical transmission path, the route switching means to the second route state.

8. The optical control apparatus according to any one of claims 2 to 7, further comprising:
first setting information sending means for sending, to a sending source of the first monitoring light, setting information relating to the first optical route and the second optical route being set by the route setting means; and
second setting information sending means for sending, to a sending source of the second monitoring light, the setting information.

9. The optical control apparatus according to claim 5, wherein
the first band control means and the second band control means are a bandpass filter in which the control band is a passband.

10. The optical control apparatus according to claim 5, wherein
the first band control means and the second band control means are a wavelength selective reflection filter in which the control band is a reflection band.

11. The optical control apparatus according to any one of claims 1 to 7, 9, and 10, wherein
each of the first connection means and the second connection means includes at least one of an optical coupler and an optical circulator, and an optical fiber.

12. The optical control apparatus according to any one of claims 2 to 7, 9, and 10, wherein
a wavelength of the first monitoring light, and a wavelength of the second monitoring light belong to a same wavelength band.

13. An optical transmission path monitoring method comprising:
sending, to a first optical transmission path, an instruction signal for instructing an optical control apparatus to achieve a loopback state in which monitoring light propagating through the first optical transmission path returns through a second optical transmission path;
sending a confirmation signal to the first optical transmission path;
determining, from a response to the confirmation signal, whether the optical control apparatus is in the loopback state;
in a case of determining that one of the optical control apparatuses is not in the loopback state, resending the instruction signal to the first optical transmission path after elapse of a predetermined time; and
in a case of determining that all of the optical control apparatuses are in the loopback state, sending the monitoring light to the first optical transmission path.

14. The optical transmission path monitoring method according to claim 13, further comprising
not sending the instruction signal, in a case where an optical signal is accepted from an opposite side via the second optical transmission path when neither the instruction signal, the confirmation signal, nor the monitoring light is sent.
